# EUROPÄISCHE PATENTANMELDUNG

(11) **EP 1 134 546 A2**
(43) Veröffentlichungstag der Anmeldung: **19.09.2001**
(21) Anmeldenummer: 01101348.9
(22) Anmeldetag: 22.01.2001
(51) Int. Cl.: G01C 11/02, G01B 11/00

(54) **Anlage zur messtechnischen räumlichen 3D-Lageerfassung von Oberflächenpunkten**

(30) Priorität: 14.03.2000 DE 10012273
(71) Anmelder: DaimlerChrysler AG, 70567 Stuttgart (DE)
(72) Erfinder: Bär, Steffen, 75397 Simmozheim (DE); Beck, Rainer, 72124 Pliezhausen (DE); Böttcher, Lothar, 71106 Magstadt (DE); Bonse, Marcus, Dr., 70563 Stuttgart (DE); Haab, Roland, 72768 Reutlingen (DE); Kappler, Dieter, 71272 Renningen (DE); Pfahler, Karl, Dr., 70180 Stuttgart (DE); Schwarzach, Richard, 72119 Ammerbuch (DE)

(57) **Zusammenfassung**

Die Erfindung betrifft eine Anlage zur messtechnischen räumlichen 3D-Lageerfassung von Oberflächenpunkten eines zu vermessenden Objektes (Messobjekt) in einem photogrammetrieschen Onlinesystem, mit einem Taster zum mechanischen Antasten eines zu vermessenden Oberflächenpunktes (Messpunkt) mit einer Tasterspitze, mit einer, starr mit dem Taster verbundenen elektronischen Kamera zur Ermittlung der räumlichen 3D-Lage der Tasterspitze im Antastzeitpunkt in Bezug auf eine ortsfest positionierte Targetfläche, die ein Messvolumen im Abstand zum Messobjekt überdeckt und mehrere in ihrer räumlichen Lage bekannte Referenzpunkte aufweist, und mit einem an die Kamera angeschlossenen Computer zur Auswertung der Kamerabilder und zur Ermittlung der Raumkoordinaten der Tasterspitze.

Um die Flexibilität einer derartigen Anlage zu verbessern, wird vorgeschlagen, daß die Targetfläche mindestens ein mobiles Targetpanel aufweist, an dem mehrere der Referenzpunkte angeordnet sind und das panelfeste Positioniermittel aufweist, die mit ortsfesten Positioniermitteln zusammenwirken, um das Targetpanel so zu positionieren, daß dessen Referenzpunkte eindeutige ihre vorbestimmte und bekannte räumliche Lage einnehmen.

## Beschreibung

Die Erfindung betrifft eine Anlage zur messtechnischen räumlichen dreidimensionalen Lageerfassung von Oberflächenpunkten eines zu vermessenden Objektes, dem sogenannten "Messobjekt", in einem photogrammetrischen Onlinesystem mit den Merkmalen des Oberbegriffs des Anspruchs 1.

Aus der DE 197 21 903 C1 ist eine Anlage dieser Art bekannt, die einen Taster zum mechanischen Antasten des jeweils zu vermessenden Oberflächenpunktes, dem sogenannten "Messpunkt", mit einer Tasterspitze aufweist. Außerdem besitzt die bekannte Anlage zumindest ein, starr mit dem Taster verbundene elektronische Kamera zur Ermittlung der räumlichen, dreidimensionalen Lage der Tasterspitze im Antastzeitpunkt in Bezug auf ein Referenzsystem. Dieses Referenzsystem wird dabei durch eine ortsfest positionierte Targetfläche gebildet, die ein Messvolumen im Abstand zum Messobjekt ganz oder teilweise überdeckt und mehrere, in ihrer räumlichen Lage bekannte, optisch unterscheidbare und flächenhaft verteilte Referenzpunkte aufweist. Die elektronische Kamera ist auf die Targetfläche ausrichtbar und an einen Computer angeschlossen, der zur automatischen Auswertung der von der Kamera übermittelten Bilder und zur Ermittlung der dreidimensionalen Raumkoordinaten der Tasterspitze dient, wobei der Computer ein entsprechendes Berechnungsprogramm benutzt.

Durch die bekannte Anlage lassen sich beliebig große Messvolumina mit gleichbleibender Messgenauigkeit erfassen.

Das Messvolumen ist nicht durch die Position und Aufnahmerichtung der Kameras begrenzt, sondern von dem durch die Targetfläche mit ihren Referenzpunkten abgedeckten Volumen.

Bei der bekannten Anlage ist ein relativ großer Aufwand erforderlich, um eine Unterseite des Messobjektes zu vermessen. Wenn es sich beim Messobjekt beispielsweise um ein Fahrzeug handelt, ist die Vermessung des Fahrzeugbodens oder des Motorraums daher sehr zeitraubend und mit einem hohen Aufwand verbunden.

Die vorliegende Erfindung beschäftigt sich mit dem Problem, eine Anlage der eingangs genannten Art dahingehend auszubilden, daß sich der Aufwand zur Durchführung einer Vermessung reduziert.

Dieses Problem wird erfindungsgemäß durch eine Anlage mit den Merkmalen des Anspruchs 1 gelöst.

Die Erfindung beruht auf dem allgemeinen Gedanken, wenigstens einen Teil der Targetfläche durch wenigstens ein tragbares und somit mobiles Targetpanel zu bilden, das mit Hilfe von Positioniermitteln in einer definierten räumlichen Lage einfach positionierbar ist. Durch die Ausbildung ortsfester Positioniermittel integriert sich das jeweilige Targetpanel beim Positionieren in die Targetfläche, so daß die Referenzpunkte des Targetpanels ihre vorbestimmte und bekannte räumliche Lage einnehmen und eine Kalibrierung des Targetpanels bzw. dessen Referenzpunkte entfallen kann.

Durch die erfindungsgemäße Ausgestaltung der Anlage ist es beispielsweise möglich, das Messvolumen bzw. die Grenzen des Messvolumens bedarfsabhängig zu verändern, ohne daß es dazu einer erneuten Kalibrierung der zusätzlich hinzugefügten Targetpanels und Referenzpunkte bedarf. Beispielsweise kann ein Targetpanel, das eine seitliche Begrenzung des Messvolumens bildet, durch ein anderes Targetpanel ersetzt werden, das seitlich versetzt positioniert wird, wodurch das Messvolumen vergrößert oder verkleinert, werden kann.

Um eine eindeutige, präzise und fixierte Positionierung des jeweiligen Targetpanels relativ zur übrigen Targetfläche zu ermöglichen, können die miteinander zusammenwirkenden panelfesten und ortsfesten Positioniermittel so ausgebildet sein, daß sie sich komplementär ergänzen und/oder formschlüssig miteinander zusammenwirken und/oder nach Art einer male-female-Verbindung zusammenwirken.

Gemäß einer bevorzugten Ausführungsform können die ortsfesten Positioniermittel an einem das Messvolumen von unten einfassenden, insbesondere im wesentlichen eben ausgebildeten Boden angebracht sein, wodurch es besonders einfach möglich ist, die Unterseite des Messobjekts im Bedarfsfall zu vermessen. Beispielsweise kann ein zu vermessendes Kraftfahrzeug in das Messvolumen eingebracht werden, während die dem Boden zugeordneten Targetpanels noch nicht positioniert sind. Danach kann das Fahrzeug angehoben werden, so daß die Targetpanels positioniert werden können. Im Anschluß daran kann die Vermessung des Fahrzeugbodens durchgeführt werden. Nach Abschluß der Vermessung des Fahrzeugbodens lassen sich die dem Boden zugeordneten Targetpanels einfach entfernen, so daß das Fahrzeug wieder abgesenkt werden kann und ggf. an seiner übrigen Oberfläche vermessen werden kann.

Entsprechend einer besonderen Ausführungsform können bei einer Targetfläche mit mehreren verschiedenen mobilen Targetpanels die Positioniermittel so konfiguriert sein, daß die verschiedenen Targetpanels verwechslungssicher positionierbar sind. Beispielsweise wird jedes Targetpanel mit einer anderen Konfiguration von im übrigen identischen Positioniermitteln ausgestattet, wodurch sich eine eindeutige und verwechslungssichere Zuordnung der Targetpanels zu der dafür vorbestimmten räumlichen Lage ergibt. Messfehler werden dadurch reduziert.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine perspektivische Ansicht auf eine erfindungsgemäße Anlage,
- Fig. 2: eine Draufsicht von oben auf einen Wandabschnitt der Anlage gemäß Fig. 1,
- Fig. 3: eine Ansicht von unten auf ein Targetpanel für einen Wandabschnitt gemäß Fig. 2,
- Fig. 4: einen Längsschnitt durch einen Wandabschnitt und ein zugehöriges Targetpanel in auseinandergezogener Darstellung und
- Fig. 5: einen Längsschnitt durch einen Wandabschnitt mit daran angebrachtem zugehörigen Targetpanel.

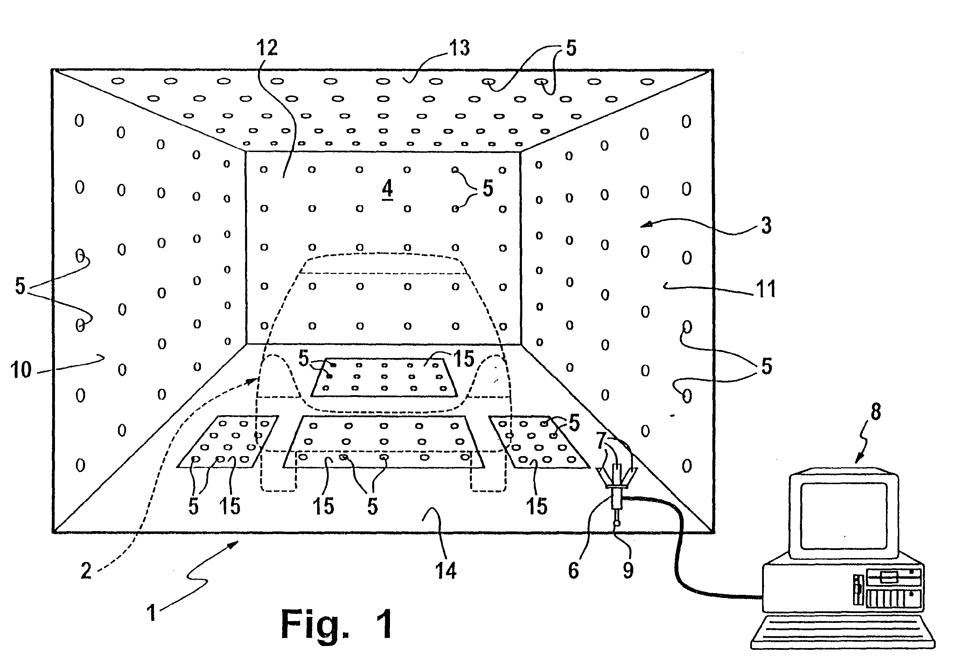

Entsprechend Fig. 1 weist eine Anlage 1 zur messtechnischen räumlichen dreidimensionalen Lageerfassung von Objektpunkten eines Messobjektes 2, das hier durch ein mit unterbrochenen Linien dargestelltes Kraftfahrzeug gebildet ist, als Referenzsystem eine Targetfläche 3 auf. Diese Targetfläche 3 umspannt im vorliegenden Ausführungsbeispiel ein würfelförmiges Messvolumen 4, in dem das Messobjekt 2 angeordnet ist und das zur besseren Darstellbarkeit auf der dem Betrachter zugewandten Seite offen ausgebildet ist. Die Targetfläche 3 besitzt eine Vielzahl hochgenau eingemessener Referenzpunkte 5.

Des weiteren umfaßt die Anlage 1 einen Taster 6, der an seinem oberen Endbereich mit drei elektronischen Kameras 7 ausgestattet ist, die starr mit dem Taster 6 verbunden sind. Der Taster 6 ist außerdem direkt oder indirekt an einen Computer 8 angeschlossen, der mit geeigneten Berechnungsprogrammen ausgestattet ist. An seinem unteren Ende besitzt der Taster 6 eine vorzugsweise auswechelbare Tasterspitze 9.

Mit dieser Tasterspitze 9 werden die zu vermessenden Oberflächenpunkte des Messobjekts 2 mechanisch angetastet. Die am Taster 6 starr befestigten Kameras 7 werden auf die Targetfläche 3 und somit auf deren Referenzpunkte 5 ausgerichtet und dienen dabei zur Ermittlung der Raumlage der Tasterspitze 9 und somit des aktuell angetasteten Oberflächenpunktes im Antastzeitpunkt in Bezug auf dieses Referenzsystem aus Targetfläche 3 und Referenzpunkten 5. Der Computer 8 wertet die von ihm von den Kameras 7 übermittelten Bilder aus und ermittelt mit Hilfe des dazu vorgesehenen Berechnungsprogrammes die dreidimensionalen Koordinaten der Tasterspitze 9 und somit des jeweiligen Messpunktes.

In der hier wiedergegebenen bevorzugten Ausführungsform umfaßt die Targetfläche 3 zwei Seitenwände 10 und 11, eine Frontwand 12, ggf. eine hier nicht dargestellte Rückwand sowie einen Himmel 13 und einen Boden 14. Vorzugsweise sind die Seitenwände 10 und 11, die Frontwand 12 sowie der Himmel 13 durch fest installierte Bereiche der Targetfläche 3 gebildet. Im Unterschied dazu besitzt die Targetfläche 3 am Boden 14 hier vier einfach montierbare und demontierbare, tragbare und somit mobile Targetpanele 15, die bei Bedarf einfach und rasch montiert werden können und ebenso rasch entfernbar sind, wenn sie nicht mehr benötigt werden. Geeignete Positioniermittel sorgen dabei dafür, daß die Targetpanele 15 und somit die darauf angebrachten Referenzpunkte 5 im montierten Zustand steht die vorbestimmte eingemessene Referenzlage im Referenzsystem einnehmen, so daß sich die Targetpanele 15 ohne erneute Einmessung und Kalibrierung in die gesamte Targetfläche 3 integrieren.

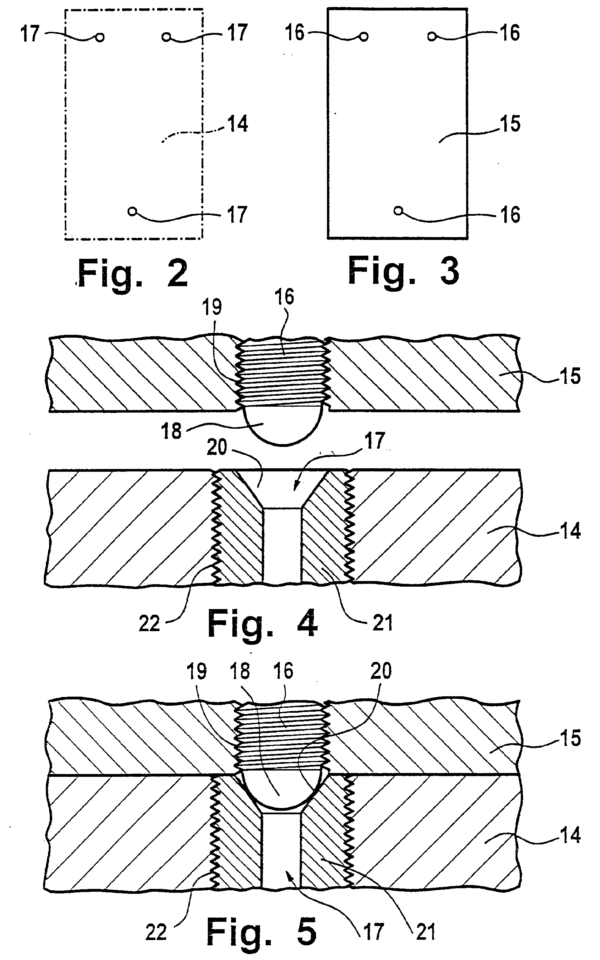

Entsprechend den Fig. 2 und 3 können die vorgenannten Positioniermittel in einer besonders einfachen Ausführungsform sogenannte "male-female-Verbindungen" aufweisen, die jeweils einen Bolzen 16 und eine zugehörige Aufnahmeöffnung 17 aufweisen, in welche der zugehörige Bolzen 16 einsteckbar ist. Vorzugsweise sind die Aufnahmeöffnungen 17 in den Boden 14 eingebracht, so daß diese ortsfeste Positioniermittel bilden, während die Bolzen 16 an der Rückseite des jeweiligen Targetpanels 15 angebracht sind und damit panelfeste Positioniermittel bilden. Durch die gewählte Konfiguration der panelfesten Positioniermittel 16 und der ortsfesten Positioniermittel 17 ergibt sich eine eindeutige Zuordnung und somit Positionierung des Targetpanels 15 an der dafür vorgesehenen Position innerhalb des Messvolumens 4, so daß die Referenzpunkte 5 des jeweiligen Targetpanels 15 die dafür vorbestimmten Referenzpositionen innerhalb der Targetfläche 3 einnehmen. Um eine eindeutige Raumlage für die Referenzpunkte gewährleisten zu können, weisen verschiedene Targetpanels 15 z.B. unterschiedliche Konfigurationen der Positioniermittel 16, 17 auf, wobei die verwendeten Positioniermittel 16, 17 bei allen Targetpanelen 15 zweckmäßig einen identischen Aufbau aufweisen können.

Entsprechend den Fig. 4 und 5 können bei einer bevorzugten Ausführungform die Bolzen 16 einen Kugelkopf 18 aufweisen, der an der Rückseite des Targetpanels 15 senkrecht absteht. Zur Anbindung des Bolzens 16 an das Targetpanel 15 kann beispielsweise ein Schraubgewinde 19 dienen.

Um eine hochpräzise Positionierung des Targetpanels 15 und somit der daran angebrachten Referenzpunkte 5 zu erreichen, weisen die Aufnahmeöffnungen 17 z.B. einen Einführkegel 20 auf, der eine Zentrierung des damit zusammenwirkenden Kugelkopfes 18 bewirkt. Vorzugsweise sind die Aufnahmeöffnung 17 und deren Einführkegel 20 in einer Positionierhülse 21 ausgebildet, die in den Boden 14 eingesetzt ist. Eine derartige Positionierhülse 21 kann somit separat vom Boden 14 hergestellt werden, wodurch höchste Genauigkeitsanforderungen erfüllt werden können. Beispielsweise ist die Positionierhülse durch ein Gewinde 22 am Boden 14 festgelegt.

Wie aus den Fig. 4 und 5 deutlich hervorgeht, können die mobilen Targetpanele 15 rasch montiert und demontiert werden, wobei die vorgesehenen Positioniermittel 16 und 17 eine exakte und reproduzierbare Positionierung der Targetpanele 15 und somit deren Referenzpunkte 5 innerhalb der Targetfläche 3 gewährleisten. Die hier gezeigten Positioniermittel 16 und 17 wirken zur Positionierung der Targetpanele 15 formschlüssig zusammen und verhindern ein selbsttätiges Verstellen der Targetpanele 15 entlang des Bodens 14.

Der Boden 14 ist vorzugsweise eben ausgebildet; dementsprechend sind auch die Targetpanele 15 vorzugsweise mit einer ebenen Rückseite ausgestattet.

## Patentansprüche

1. Anlage zur messtechnischen räumlichen 3D-Lageerfassung von Oberflächenpunkten eines zu vermessenden Objektes (Messobjekt 2) in einem photogrammetrieschen Onlinesystem,
- mit einem Taster (6) zum mechanischen' Antasten des jeweils zu vermessenden Oberflächenpunktes (Messpunkt) mit einer Tasterspitze (9),
- mit mindestens einer, starr mit dem Taster (6) verbundenen elektronischen Kamera (7) zur Ermittlung der räumlichen 3D-Lage der Tasterspitze 9 im Antastzeitpunkt in Bezug auf eine ortsfest positionierte Targetfläche (3), die ein Messvolumen (4) im Abstand zum Messobjekt (2) ganz oder teilweise überdeckt und mehrere in ihrer räumlichen Lage bekannte, optisch unterscheidbare und flächenhaft verteilte Referenzpunkte (5) aufweist,
- mit einem an die zumindest eine elektronische Kamera (7) angeschlossenen Computer (8) zur automatischen Auswertung der von der wenigstens einen Kamera (7) übermittelten Bilder und zur Ermittlung der 3D-Raumkoordinaten der Tasterspitze (9) mit Hilfe eines entsprechenden Berechnungsprogrammes,
**dadurch gekennzeichnet,**
**daß** die Targetfläche (3) mindestens ein mobiles Targetpanel (15) aufweisr, an dem mehrere der Referenzpunkte (5) angeordnet sind und das panelfeste Positioniermittel (16) aufweist, die mit ortsfesten Positioniermitteln (17) zusammenwirken, um das Targetpanel (15) so zu positionieren, daß dessen Referenzpunkte (5) eindeutig ihre vorbestimmte und bekannte räumliche Lage einnehmen.

2. Anlage nach Anspruch 1,
**dadurch gekennzeichnet,**
**daß** sich die panelfesten und ortsfesten Positioniermittel (16, 17) komplementär ergänzen.

3. Anlage nach Anspruch 1 oder 2,
**dadurch gekennzeichnet,**
**daß** die panelfesten und ortsfesten Positioniermittel (16 und 17) formschlüssig zusammenwirken.

4. Anlage nach einem der Ansprüche 1 bis 3,
**dadurch gekennzeichnet,**
**daß** die panelfesten und ortsfesten Positioniermittel (16, 17) nach Art einer male-female-Verbindung zusammenwirken.

5. Anlage nach einem der Ansprüche 1 bis 4,
**dadurch gekennzeichnet,**
**daß** die Positioniermittel mindestens einen Bolzen (16) sowie für jeden Bolzen eine Aufnahmeöffnung (17) aufweisen, wobei zur Positionierung des jeweiligen Targetpanels (15) jeder Bolzen (16) in die zugehörige Aufnahmeöffnung (17) eindringt.

6. Anlage nach Anspruch 5,
**dadurch gekennzeichnet,**
**daß** der Bolzen (16) einen Kugelkopf (18) aufweist.

7. Anlage nach Anspruch 5 oder 6,
**dadurch gekennzeichnet,**
**daß** die Aufnahmeöffnung (17) einen Einführkegel (20) aufweist.

8. Anlage nach einem der Ansprüche 5 bis 7,
**dadurch gekennzeichnet,**
**daß** die Positioniermittel eine Positionierhülse (21) aufweisen, die die Aufnahmeöffnung (17) enthält.

9. Anlage nach einem der Ansprüche 1 bis 8,
**dadurch gekennzeichnet,**
**daß** die panelfesten Positioniermittel (16) an einer Rückseite des Targetpanels (15) angebracht sind, während die zugehörigen Referenzpunkte (5) an einer Vorderseite des Targetpanels (15) angeordnet sind.

10. Anlage nach Anspruch 9,
**dadurch gekennzeichnet,**
**daß** die Rückseite des Targetpanels (15) im wesentlichen eben ausgebildet ist.

11. Anlage nach einem der Ansprüche 1 bis 10,
**dadurch gekennzeichnet,**
**daß** die ortsfesten Positioniermittel (17) an einer das Messvolumen (4) begrenzenden Wandung (14) angebracht sind.

12. Anlage nach Anspruch 11,
**dadurch gekennzeichnet,**
**daß** die das Messvolumen (4) begrenzende Wandung durch einen das Messvolumen (4) von unten begrenzenden Boden (14) gebildet ist.

13. Anlage nach Anspruch 11 oder 12,
**dadurch gekennzeichnet,**
**daß** die Wandung (14) zumindest in einem dem jeweiligen Targetpanel (15) zugeordneten Abschnitt im wesentlichen eben ausgebildet ist.

14. Anlage nach einem der Ansprüche 1 bis 13,
**dadurch gekennzeichnet,**
**daß** bei nach Art einer male-female-Verbindung ausgebildeten Positioniermitteln (16, 17) die male-Komponenten (16) an einer Rückseite des Targetpanels (15) angebracht sind und die female-Komponenten (17) an einer das Messvolumen (4) begrenzenden Wandung (14) angebracht sind.

15. Anlage nach einem der Ansprüche 1 bis 14,
**dadurch gekennzeichnet,**
**daß** bei einer Targetfläche (3) mit mehreren verschiedenen mobilen Targetpanels (15) die Positioniermittel (16, 17) so konfiguriert sind, daß die verschiedenen Targetpanels (15) verwechslungssicher positionierbar sind.
